# EUROPÄISCHE PATENTSCHRIFT

(11) **EP 1 674 392 B1**
(45) Veröffentlichungstag und Bekanntmachung des Hinweises auf die Patenterteilung: **11.07.2007**
(21) Anmeldenummer: 05024050.6
(22) Anmeldetag: 04.11.2005
(51) Int. Cl.: B64G 1/64

(54) **Auswurfvorrichtung für drallstabilisierte Behälter**
Ejector for spin-stabilised container
Ejecteur pour réservoirs stabilisés par rotation

(30) Priorität: 23.12.2004 DE 102004063116
(43) Veröffentlichungstag der Anmeldung: 28.06.2006
(73) Patentinhaber: Astrium GmbH, 85521 Ottobrunn (DE)
(72) Erfinder: Köhler, Horst, 28279 Bremen (DE)
(74) Vertreter: Hansmann, Dierk

(56) Entgegenhaltungen:
- US-A- 4 067 308
- US-A- 5 253 827

## Beschreibung

Die Erfindung betrifft eine Vorrichtung zum Auswurf von drallstabilisierten, in etwa zylindrisch ausgebildeten Behältern aus einem Raumflugkörper, wobei der auszustoßende Behälter über eine im Raumflugkörper anordbare Antriebseinheit in eine kombinierte Rotations- und Translationsbewegung versetzt wird und wobei Mittel zum Haltern und zum Führen des auszustoßenden Behälters vorgesehen sind.

Um Versuchsproben von einer Raumstation, beispielsweise der International Space Station, ISS, auf die Erde zurückzubringen, stehen derzeit praktisch nur die als Space Shuttle bezeichneten Raumtransporter zur Verfügung. Für Versorgungsflüge von der Erde zur ISS können darüber hinaus auch Raketen, wie das ARIANE Transfer Vehicle, ATV, und die russische Progress Kapsel, eingesetzt werden.

Durch eine Erweiterung des ATV bzw. der Progresskapsel um einen Nutzlast-Rückkehrbehälter besteht die Möglichkeit, unabhängig vom Space Shuttle Versuchsproben auf die Erde zurück zu transportieren.

Dabei wird der Rückkehrbehälter in der Ladeluke des ATV oder Progresskapsel montiert und, bevor das ATV bzw. die Progresskapsel in die Erdatmosphäre eintritt und verglüht, aus diesem ausgeworfen. Der Behälter selbst ist dabei mit einem Hitzeschutzschild ausgestattet, das den unbeschadeten wiedereintritt in die Erdatmosphäre ermöglicht.

Ein derartiger Rückkehrbehälter soll in der Lage sein, Versuchsproben bis zu einer Masse von 360 kg auf die Erde zurückzuführen. Um diesen bei der Rückkehr zuverlässig aus dem Transportvehikel auszustoßen, wird eine Auswurfvorrichtung benötigt, die dem Behälter eine translatorische Geschwindigkeit in der Größenordnung von etwa 1 m/s zu verleihen vermag. Ferner muß sie, zur Stabilisierung, dem Behälter einen Drehimpuls um seine Längsachse vermitteln.

In der Vergangenheit wurde eine Reihe von Auswurfvorrichtungen für Raumflugkörper aus Satelliten entwickelt, so zum Beispiel zur Anwendung in Spionagesatelliten zum Ausstoß von Rückkehrkapseln mit belichteten Filmen. Bei diesen Anwendungen waren die Masse und Dimensionen der ausgestoßenen Subkörper vergleichsweise gering. Weitere Vorrichtungen wurden für die Aussetzung von drehachsen- oder spinstablisierten Kommunikationssatelliten oder von Kleinsatelliten aus dem Space Shuttle entwickelt. Bei ersteren handelt es sich um Flugkörper mit deutlich größeren Dimensionen, beispielsweise mit Durchmessern größer als 2,5 Metern, und mit einer vergleichsweise hohen Masse, bei letzteren um Flugkörper mit geringerer Dimension und kleinerer Masse. Ähnliche Vorrichtungen sind auch bereits für Wiedereintrittskapseln mit mittleren Dimensionen vorgeschlagen geworden. Ferner ist nach der US 3,333,788 eine Vorrichtung bekannt, bei der zwei rotierende Körper getrennt wurden. Die beiden Körper sind dabei durch acht Kabel verbunden, welche von einer motorgetriebenen Scheibe ab- beziehungsweise aufgewickelt werden.

Weiterhin ist nach der US 4 067 308 A ein drallstabilisierter Behälter bekannt, der in einem Gehäuse angeordnet und über Feder ausstoßbar ist. Auch nach der US 5 253 827 A ist eine Ausstoßvorrichtung über ein vertikales Führungssystem zur Führung bekannt, wobei über einen Kettenantrieb ein Ausstoß erfolgt.

Ein wesentlicher Nachteil der bisher bekannt gewordenen Ausstoßvorrichtungen liegt in ihrem verhältnismäßig hohen Gewicht und ihrem komplexen Aufbau, der zu Fehlfunktionen führen kann.

Der Erfindung liegt die Aufgabe zugrunde, eine Ausstoßvorrichtung der eingangs genannten Art so auszubilden, daß sie inhärent funktionssicher, zudem leicht und zuverlässig ist und den auszustoßenden Flugkörper in eine vorab exakt festlegbare Kombination aus Translations- und Rotationsbewegung zu versetzen vermag.

Diese Aufgabe wird dadurch gelöst, daß bei einer derartigen Vorrichtung die Antriebseinheit aus wenigstens zwei Ringelementen sowie aus verdrillbaren Zugseilen besteht, deren Länge in etwa wenigstens der axialen Erstreckung des Behälters entspricht, die zwischen den Ringelementen angeordnet sind und die jeweils mit ihrem einen Ende am ersten Ringelement befestigt sind und deren anderes Ende jeweils mit einer federbeaufschlagten Aufwickelvorrichtung verbunden ist, die am zweiten Ringelement angeordnet ist, wobei die beiden Ringelemente zur Aufnahme des Behälters in ihrem Inneren ausgebildet und mit diesem lösbar und verdrehsicher verbindbar sind und wobei am zweiten, mit der Struktur des Raumflugkörpers verbindbaren Ringelement zusätzlich zu Halteelementen Führungselemente für den Behälter angeordnet sind.

Die erfindungsgemäße Vorrichtung verwendet als Drehantrieb eine Reihe von Drehfedern und kombiniert die Erzeugung der Rotationsbewegung zur Spinstabilisierung des auszustoßenden Behälters mit der für den Ausstoßvorgang erforderlichen Translationsbewegung dadurch, daß nach dem Einbringen des Behälters in die Halterung der Auswurfvorrichtung der Behälter zunächst nur mit einem der beiden Ringelemente verbunden wird, während er gegenüber dem zweiten Ringelement mehrfach in diesem gedreht und erst dann auch an diesem fixiert wird. Durch dieses Drehen werden die Zugseile, die zwischen den beiden Ringelementen angeordnet sind, um den Behälter verdrillt. Nach dem Lösen der Verbindung zwischen dem zweiten Ringelement und dem Behälter erzeugen dann diese Zugseile, wenn sie unter der Kraft der Drehfedern aufgespult werden, über das erste Ringelement die gewünschte Kombination aus Rotations- und Translationsbewegung des Behälters.

Diese Ausbildung der Vorrichtung gemäß der Erfindung bietet eine Reihe von Vorteilen, zu deren wesentlichen die Vermeidung von Explosivstoffen in einem Raumfahrzeug und damit Eliminierung eines erheblichen Gefährdungspotentials für die Astronauten ebenso gehören wie die Minimierung von Gewicht und Volumen der Mechanik für die Drallstabilisierung sowie für den Auswurf und damit die Minimierung der Gesamtmasse des Raumflugsystem bzw. die Maximierung der verfügbaren Nutzlastmasse und des Nutzlastvolumens. Weitere Vorteile liegen in der Reduzierung der Komplexität des Auswurfmechanismus durch eine Verringerung der Anzahl der erforderlichen mechanischen und elektrischen Funktionsteile und damit einhergehend in der Maximierung der Zuverlässigkeit und der Effizienz der Anordnung. Dabei bedarf der Ausstoßvorgang aufgrund der gemäß der Erfindung vorgesehenen Verwendung von Drehfedern als Antriebselementen zudem keiner elektrischen Energie seitens des ausstoßenden Raumflugkörpers oder des Behälters, wodurch spezielle Anforderungen an eine Starkstromversorgung des Behälters bzw. des Ausstoßmechnismus im Raumflugkörper vermieden werden.

Nachfolgend soll die Erfindung anhand eines in der Zeichnung dargestellten Ausführungsbeispiels näher erläutert werden. Es zeigen
- Fig. 1: eine Gesamtanordnung einer Auswurfvorrichtung in gespanntem Zustand, jedoch ohne einen in deren Inneren anzuordnenden auszustoßenden Behälter,
- Fig. 2: die Anordnung gemäß Fig. 1 unmittelbar vor dem Einbringen eines auszustoßenden Behälters,
- Fig. 3: das Einbringen eines auszustoßenden Behälters in die Anordnung gemäß Fig. 1,
- Fig. 4: die Anordnung gemäß Fig. 1 unmittelbar nach dem vollständigen Einbringen eines auszustoßenden Behälters,
- Fig. 5: die Anordnung gemäß Fig. 1 unmittelbar vor dem Start eines auszustoßenden Behälters und
- Fig. 6: die Anordnung gemäß Fig. 1 unmittelbar nach dem Start eines auszustoßenden Behälters.

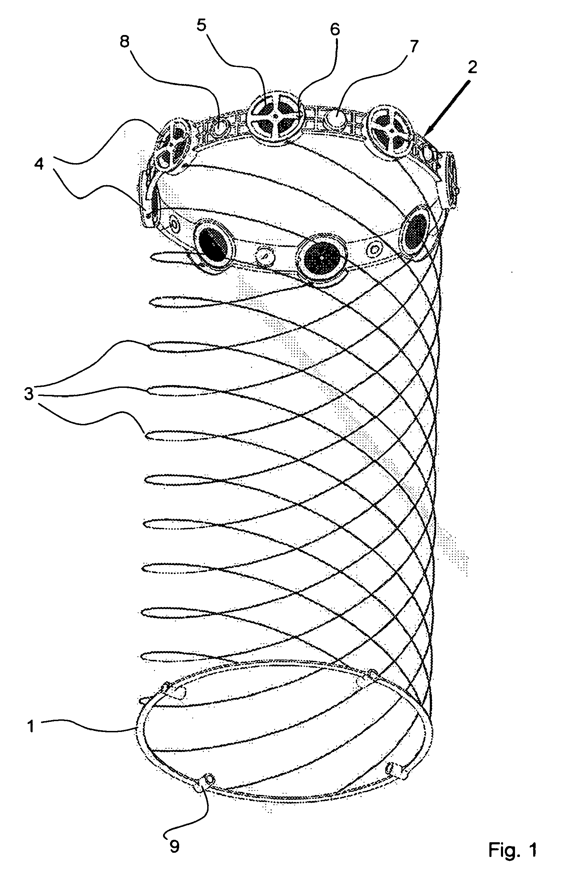

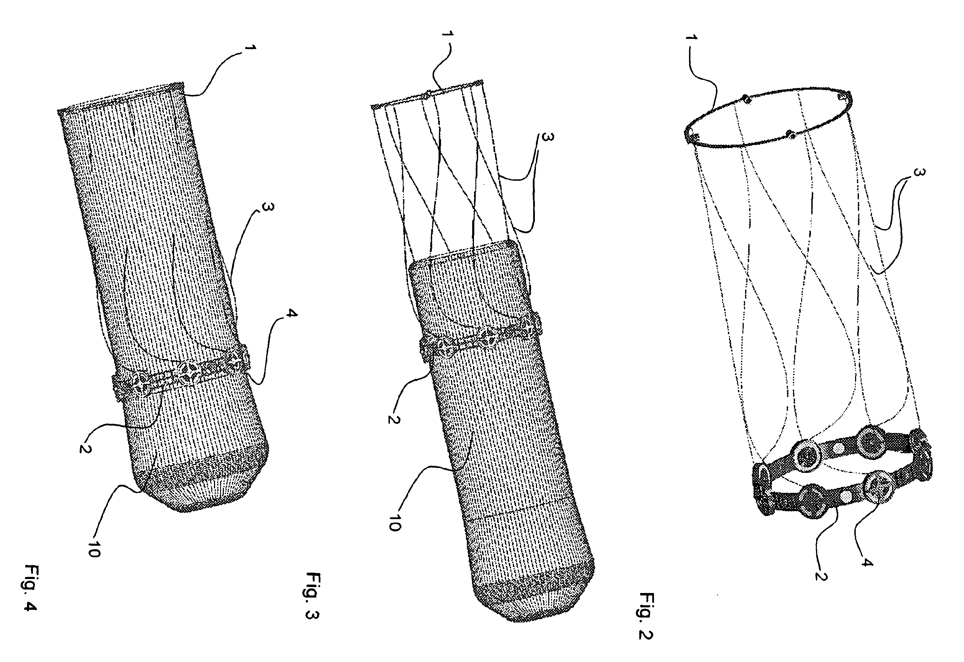

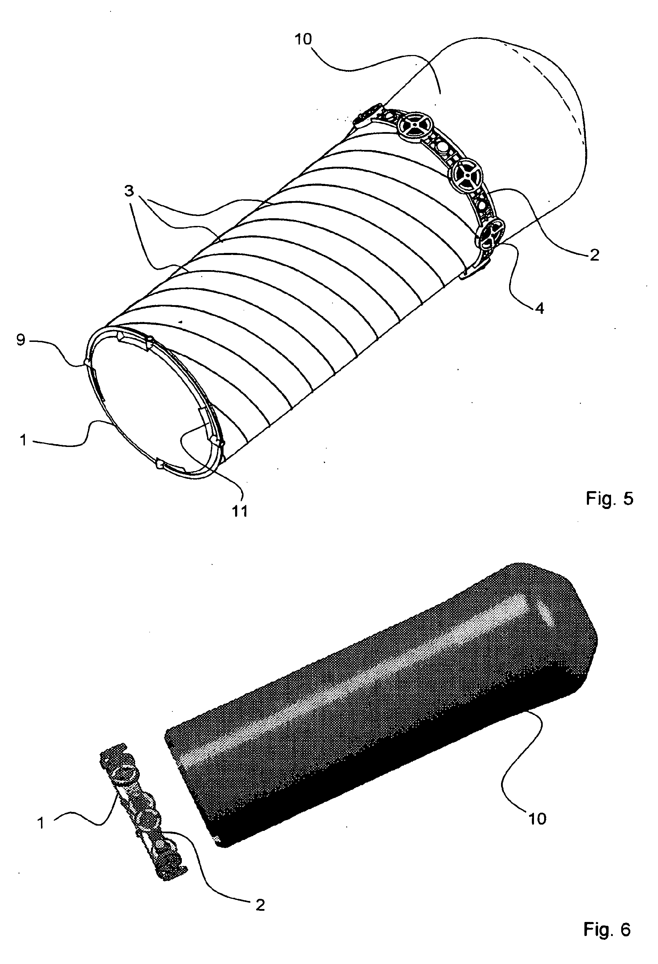

Die in Fig. 1 dargestellte Auswurfvorrichtung besteht im wesentlichen aus einem ersten und einem zweiten Ringelement 1, 2 sowie aus einer Anzahl, im vorliegenden Fall insgesamt acht, zwischen den beiden Ringelementen 1 und 2 angeordneten Zugseilen 3. Diese als Drahtseile ausgebildeten Zugseile 3 sind jeweils an einem Ende fest mit dem ersten, auch als Hauptring zu bezeichnenden Ringelement 1 verbunden, während ihre jeweils anderen Enden an Spulen oder Seilrollen 4 befestigt sind, die ihrerseits am zweiten Ringelement 2 angeordnet sind. Die Seilrollen 4 sind äquidistant über den Umfang des zweiten Ringelementes 2 verteilt angeordnet und werden über innen liegende Dreh- oder Spiralfedern 5 beaufschlagt, die jeweils durch einen Sperrstift 6 festgesetzt werden können. Weiterhin sind am zweiten Ringelement 2 eine Reihe von elektrisch beaufschlagbaren Hubmagneten 7 vorgesehen, die, alternierend mit als Führungselemente dienenden Kugelrollen 8, jeweils zwischen zwei benachbarten Seilrollen 4 angeordnet sind, so daß im Fall des hier dargestellten Ausführungsbeispiels je vier Hubmagnete 7 und vier Kugelrollen 8 vorgesehen sind. Vervollständigt wird die in Fig. 1 dargestellte Anordnung durch eine Anzahl von, im vorliegenden Fall vier, Rastelementen 9, die am ersten, als Haltering dienenden Ringelement 1 vorgesehen sind und die mit entsprechenden Aufnahmen 11 am auszuwerfenden Behälter 10 in Eingriff bringbar sind, wie in Fig. 5 erkennbar ist.

Der Flugkörper 10 weist eine im wesentlichen zylindrische Grundform auf, wobei sein in Flugrichtung gesehen vorderer Endbereich im Fall des hier dargestellten Ausführungsbeispiels leicht erweitert ausgebildet ist. Der Außendurchmesser des zylindrischen Teiles des Flugkörpers 10 ist so gewählt, daß er im wesentlichen dem Innendurchmesser der Ringelelmente 1 und 2 entspricht bzw. geringfügig kleiner als dieser ist.

In dem in Fig. 2 dargestellten Ruhezustand der Anordnung sind alle Drehfedern 5 vorgespannt und durch die zugehörigen Sperrstifte 6 gesichert. Die Zugseile 3 sind nicht aufgerollt, der Haltering 1 ist in Bezug auf den Hauptring 2 nicht verdreht und die Hubmagnete 7 befinden sich im eingefahrenen Zustand. Zur Vorbereitung des Ausstoßvorgangs wird der Behälter 10, wie in Fig. 3 angedeutet, durch den Hauptring 2 in die Anordnung eingeschoben und der Haltering 1 wird unverdreht so auf den Behälter 10 aufgesetzt, daß die Rastelemente 9 des Halteringes 1 mit den entsprechenden Aufnahmen 11 am auszuwerfenden Behälter 10 in Eingriff gelangen. Dieser Zustand ist in Fig. 4 dargestellt.

Nunmehr wird der Behälter 10 zusammen mit dem Haltering 1 gegenüber dem Hauptring 2 um etwa sechs Umdrehungen verdreht, so daß die Zugseile 3 um den Behälter 10 verdrillt werden. Der Behälter 10 wird dabei durch die Kugelrollen 8 in seiner zentrierten Position im Inneren dieses Ringelementes 2 gehalten. Nach Erreichen des in Fig. 5 dargestellten Endzustandes werden die Hubmagnete 7 ausgefahren, um den Behälter 10 gegenüber dem Hauptring 2 zu arretieren.

Durch Entfernen aller Sperrstifte 6 werden die Drehfedern 5 entsichert und die Zugseile 3 unter Spannung gebracht. In diesem Zustand erfolgt die Montage der gesamten Anordnung in einer entsprechenden, im Bild nicht dargestellten Halterung im Inneren des ausstoßenden Raumflugkörpers, beispielsweise der ATV- oder Progress-Kapsel, wobei das Ringelement 2 fest mit der Struktur dieses Raumflugkörpers verbunden wird.

Der Start bzw. Ausstoßvorgang wird durch das Einfahren der Hubmagnete 7 initiiert, wodurch der Behälter 10 gegenüber dem Hauptring oder Ringelement 2 freigegeben wird. Das Einziehen der Zugseile 3 durch die von den vorgespannten Drehfedern 5 beaufschlagten Seilrollen 4 bewegt nun das erste Ringelement oder den Haltering 1 und mit diesem den Behälter 10 unter Ausführen einer Drehbewegung in Richtung auf das an der Struktur des Raumflugkörpers fixierte zweite Ringelement 2. Der Behälter 10 wird dadurch in einer Kombination aus einer Rotations- und einer Translationsbewegung aus dem Raumflugkörper ausgeworfen und kann drallstabilisiert zur Erde zurückkehren. Fig. 6 zeigt dabei den Behälter 10 unmittelbar nach dem verlassen der Anordnung der beiden Ringelemente 1 und zwei, die nach dem Aufrollen der Zugseile 3 praktisch aneinanderliegen.

## Patentansprüche

1. Vorrichtung zum Auswurf von drallstabilisierten, in etwa zylindrisch ausgebildeten Behältern aus einem Raumflugkörper, wobei der auszustoßende Behälter über eine im Raumflugkörper anordbare Antriebseinheit in eine kombinierte Rotations- und Translationsbewegung versetzt wird und wobei Mittel zum Haltern und zum Führen des auszustoßenden Behälters vorgesehen sind, **dadurch gekennzeichnet, daß** die Antriebseinheit aus wenigstens zwei Ringelementen (1, 2) sowie aus verdrillbaren Zugseilen (3) besteht, deren Länge in etwa wenigstens der axialen Erstreckung des Behälters (10) entspricht, die zwischen den Ringelementen (1, 2) angeordnet sind und die jeweils mit ihrem einen Ende am ersten Ringelement (1) befestigt sind und deren anderes Ende jeweils mit einer federbeaufschlagten Aufwickelvorrichtung (4, 5) verbunden ist, die am zweiten Ringelement (2) angeordnet ist, wobei die beiden Ringelemente (1, 2) zur Aufnahme des Behälters (10) in ihrem Inneren ausgebildet und mit diesem lösbar und verdrehsicher verbindbar sind und wobei am zweiten, mit der Struktur des Raumflugkörpers verbindbaren Ringelement (2) zusätzlich zu Halteelementen (7) Führungselemente (8) für den Behälter (10) angeordnet sind.

2. Vorrichtung nach Anspruch 1, **dadurch gekennzeichnet, daß** die Aufwickelvorrichtungen aus jeweils über eine Drehfeder (5) beaufschlagbaren Spulen (4) bestehen.

3. Vorrichtung nach Anspruch 1 oder 2, **dadurch gekennzeichnet, daß** die Zugseile (3) sowie die Aufwickelvorrichtungen (4, 5) jeweils äquidistant über den Umfang des zweiten Ringelementes (2) verteilt angeordnet sind.

4. Vorrichtung nach einem der Ansprüche 1 bis 3, **dadurch gekennzeichnet, daß** die Halteelemente aus Hubmagneten (7) bestehen.

5. Vorrichtung nach einem der Ansprüche 1 bis 4, **dadurch gekennzeichnet, daß** die Führungselemente aus Kugelrollen (8) bestehen.

6. Vorrichtung nach einem der Ansprüche 1 bis 5, **dadurch gekennzeichnet, daß** die Halte- und Führungselemente (7, 8) jeweils zwischen benachbarten Aufwickelvorrichtungen (4, 5) angeordnet sind.

7. Vorrichtung nach einem der Ansprüche 1 bis 6, **dadurch gekennzeichnet, daß** wenigstens je vier Halteelemente (7) und Aufwickelvorrichtungen (4, 5) vorgesehen sind, die alternierend angeordnet sind.

8. Vorrichtung nach einem der Ansprüche 1 bis 7, **dadurch gekennzeichnet, daß** die Zugseile (3) aus Drahtseilen bestehen.

9. Vorrichtung nach einem der Ansprüche 1 bis 8, **dadurch gekennzeichnet, daß** insgesamt acht Zugseile (3) vorgesehen sind

## Claims

1. Device for ejecting spin-stabilised containers of an approximately cylindrical shape from a spacecraft, whereby the container to be ejected is displaced in a combined rotating and translating motion by means of a drive unit which can be disposed in the spacecraft, and means are provided for retaining and guiding the container to be ejected, **characterised in that** the drive unit comprises at least two ring elements (1, 2) as well as traction cables (3) which can be twisted, the length of which more or less corresponds to the axial extension of the container (10), which are disposed between the ring elements (1, 2) and are respectively attached by their one end to the first ring element (1), and the other end is respectively connected to a spring-biased winding mechanism (4, 5) disposed on the second ring element (2), and the two ring elements (1, 2) are designed to accommodate the container (10) in their interior and to be releasably connected to it and prevent it from rotating, and the second ring element (2), which can be connected to the structure of the spacecraft, is provided with guide elements (8) for the container (10) in addition to retaining elements (7).

2. Device as claimed in claim 1, **characterised in that** the winding mechanisms respectively have reels (4) which can be acted on by means of a torsion spring (5).

3. Device as claimed in claim 1 or 2, **characterised in that** the traction cables (3) and the winding mechanisms (4, 5) are respectively distributed equidistantly around the circumference of the second ring element (2).

4. Device as claimed in one of claims 1 to 3, **characterised in that** the retaining elements are solenoid actuators (7).

5. Device as claimed in one of claims 1 to 4, **characterised in that** the guide elements are spherical rollers (8).

6. Device as claimed in one of claims 1 to 5, **characterised in that** the retaining and guide elements (7, 8) are respectively disposed between adjacent winding mechanisms (4, 5).

7. Device as claimed in one of claims 1 to 6, **characterised in that** at least four retaining elements (7) and winding mechanisms (4, 5) each are provided, disposed in alternation.

8. Device as claimed in one of claims 1 to 7, **characterised in that** the traction cables (3) are wire ropes.

9. Device as claimed in one of claims 1 to 8, **characterised in that** eight traction cables (3) are provided in total.

## Revendications

1. Dispositif pour éjecter des réceptacles stabilisés par rotation de forme approximativement cylindrique d'un engin spatial, dans lequel le réceptacle à éjecter est mis en mouvement de rotation et de translation combinées via une unité de propulsion pouvant être agencée dans l'engin spatial et dans lequel sont prévus des moyens pour tenir et guider le réceptacle à expulser, **caractérisé en ce que** l'unité de propulsion est constituée d'au moins deux éléments annulaires (1, 2) ainsi que de câbles de traction (3) pouvant être torsadés, dont la longueur correspond approximativement au moins à l'extension axiale du réceptacle (10), qui sont agencés entre les éléments annulaires (1, 2) et qui sont fixés respectivement par une de leur extrémité sur le premier élément annulaire (1), et dont l'autre extrémité est raccordée respectivement à un dispositif d'enroulement (4, 5) sollicité par un ressort qui est agencé sur le second élément annulaire (2), dans lequel les deux éléments annulaires (1, 2) sont conformés pour recevoir à l'intérieur le réceptacle (10) et peuvent être raccordés à celui-ci de manière amovible et antigiratoire et dans lequel le second élément annulaire (2) pouvant être raccordé à la structure de l'engin spatial est pourvu, en plus d'éléments de retenue (7), d'éléments de guidage (8) pour le réceptacle (10) .

2. Dispositif selon la revendication 1, **caractérisé en ce que** les dispositifs d'enroulement sont constitués de bobines (4) pouvant être sollicitées respectivement par un ressort de torsion (5).

3. Dispositif selon la revendication 1 ou 2, **caractérisé en ce que** les câbles de traction (3) ainsi que les dispositifs d'enroulement (4, 5) sont distribués à chaque fois de manière équidistante sur le pourtour du second élément annulaire (2).

4. Dispositif selon l'une quelconque des revendications 1 à 3, **caractérisé en ce que** les éléments de retenue sont constitués d'aimants de levage (7) .

5. Dispositif selon l'une quelconque des revendications 1 à 4, **caractérisé en ce que** les éléments de guidage sont constitués de billes de roulement (8) .

6. Dispositif selon l'une quelconque des revendications 1 à 5, **caractérisé en ce que** les éléments de retenue et de guidage (7, 8) sont agencés respectivement entre des dispositifs d'enroulement adjacents (4, 5).

7. Dispositif selon l'une quelconque des revendications 1 à 6, **caractérisé en ce que** l'on prévoit au moins quatre éléments de retenue (7) et dispositifs d'enroulement (4, 5) qui sont agencés en alternance.

8. Dispositif selon l'une quelconque des revendications 1 à 7, **caractérisé en ce que** les câbles de traction (3) sont constitués de câbles métalliques.

9. Dispositif selon l'une quelconque des revendications 1 à 8, **caractérisé en ce que** l'on prévoit au total huit câbles de traction (3).
